Europäisches Patentamt

European Patent Office

Office européen des brevets

(11) Veröffentlichungsnummer: **0 103 881**
A2

(12) **EUROPÄISCHE PATENTANMELDUNG**

(21) Anmeldenummer: **83109280.4**

(22) Anmeldetag: **19.09.83**

(51) Int. Cl.³: **B 01 D 53/34**
**B 01 D 53/30**

(30) Priorität: 20.09.82 DE 3234796

(43) Veröffentlichungstag der Anmeldung:
28.03.84 Patentblatt 84/13

(84) Benannte Vertragsstaaten:
AT BE CH DE FR GB IT LI LU NL SE

(71) Anmelder: Dr. Goldberg & Partner Umwelttechnik
GmbH
Bocksdornstrasse 5
D-8000 München 5(DE)

(72) Erfinder: Goldberg, Michel, Dr.
Görresstrasse 12
D-8000 München 40(DE)

(74) Vertreter: Vossius Vossius Tauchner Heunemann Rauh
Siebertstrasse 4 P.O. Box 86 07 67
D-8000 München 86(DE)

(54) Verfahren und Anlage zum Abscheiden von gasförmigen Schadstoffen aus Rauchgasen mittels staubförmiger Additive.

(57) Zum Abscheiden von gasförmigen Schadstoffen wie Chlorwasserstoff, Fluorwasserstoff oder Schwefeloxide, aus Rauchgasen von Müllverbrennungsanlagen werden dem Rauchgas staubförmige Additive, wie Kalk oder Calziumkarbonat, zugegeben, um die Schadstoffe zu binden. Das Abscheiden der so beladenen Additive erfolgt mittels Filtern. Um nun mit möglichst geringen Additivmengen bei hohem Reinigungsgrad auszukommen, wird die Additivzufuhr über eine Regelschleife mit Sollwert/Istwer-Vergleich eingestellt. Dabei wird der Istwert mittels eines Schadstoffdetektors gemessen, der in Strömungsrichtung der ungereinigten oder teilgereinigten Rauchgase vor der steuerbaren Additivzufuhr angeord net ist.

Fig. 1

EP 0 103 881 A2

OSSIUS · VOSSIUS · TAUCHNER · HEUNEMANN · RAUH
PATENTANWÄLTE

0103881

SIEBERTSTRASSE 4 · 8000 MÜNCHEN 86 · PHONE: (089) 47 40 75
CABLE: BENZOLPATENT MÜNCHEN · TELEX 5-29 453 VOPAT D

19. Sep. 196.

Unser Zeichen: S 568 EP

DR. GOLDBERG & PARTNER UMWELTTECHNIK GMBH
8000 München

"VERFAHREN UND ANLAGE ZUM ABSCHEIDEN VON GASFÖRMIGEN
SCHADSTOFFEN AUS RAUCHGASEN MITTELS STAUBFÖRMIGER
ADDITIVE"

Die Erfindung betrifft ein Verfahren gemäß dem Oberbegriff des Anspruchs 1 sowie eine Anlage zur Durchführung dieses Verfahrens.

Bezüglich der Emissionsgrenzwerte von industriellen Anlagen macht die Technische Anleitung zur Reinhaltung der Luft (TA-Luft) unterschiedliche Angaben, je nachdem für welchen Zweck die betreffende Anlage bestimmt ist. So darf beispielsweise die HCl-Konzentration im Abgas 10 mg/m³ nicht überschreiten, wenn es sich um die Herstellung von Chlorwasserstoff aus Wasserstoff und Chlor handelt, während für die Verbrennung von Abfällen zur Zeit der Grenzwert bei 100 mg/m³ liegt (Summe an organischen Chlor-Verbindungen angegeben als $Cl^-$). Je nachdem ist daher auch der zur Abgasreinigung erforderliche Aufwand unterschiedlich: während im einen Falle oft eine einfache Wasserwäsche genügt, muß im anderen Fall die Wäsche mehrstufig ausgelegt oder sogar eine alkalische Abgaswäsche nachgeschaltet werden.

In jüngster Zeit wurde die trockene Abscheidung luftfremder, gasförmiger Stoffe erheblich weiterentwickelt, und es steht zu erwarten, daß für bestimmte Feuerungsanlagen, insbesondere im Bereich der thermischen Abfallbeseitigung, die naß arbeitenden Verfahren durch trockene Abgasreinigungsverfahren verdrängt werden.

Aus der US-A-43 10 498 ist ein Verfahren zum Abscheiden von gasförmigen Schadstoffen ($SO_2$, HF, HCl) aus Rauchgasen durch Einblasen von staubförmigen Additiven hinter dem Ofen in den Rauchgasstrom und anschließendes Abscheiden der mit Schadstoffen beladenen Additive bekannt, wobei man den Schadstoffgehalt im teilgereinigten Rauchgas mißt und durch Sollwert/Istwert-Vergleich die Additivzufuhr regelt. Da in diesem Falle die Meßstelle für den Schadstoffgehalt in Strömungsrichtung des Rauchgases nach der Additivzufuhr angeordnet ist, können kurzzeitige Konzentrationsspitzen nicht kompensiert werden, da die Konzentrationsspitze den Abscheider bereits durchlaufen hat, wenn die Meßstelle auf den hohen Meßwert anspricht.

Aus der DE-A 28 39 541 ist ein mehrstufiges Verfahren zum Abscheiden von gasförmigen Schadstoffen aus Rauchgasen von Müllverbrennungsanlagen bekannt, wobei in den verschiedenen Stufen das Additiv eingeblasen und dazwischen mittels Zyklonabscheidern abgeschieden wird. Hierbei erfolgt die Zudosierung der Additive praktisch im Gegenstrom zur Rauchgasbewegung, so daß die Additive dort den größten Anreicherungsgrad aufweisen, wo auch die Rauchgase den größten Schadstoffgehalt besitzen; dadurch verhält sich das Reaktionsvermögen der in den verschiedenen Stufen zugegebenen Additive umgekehrt proportional zum Schadstoffgehalt der Rauchgase.

- 3 -                                    0103881

Aus der DE-A 29 34 109 ist ein zweistufiges Verfahren zur
trockenen Behandlung von Abgasströmen in Abgasreinigungssystemen bekannt, bei dem in der zweiten Reinigungsstufe
eine Nachreinigung auf den Sollwert erfolgt. Wie dabei die
Abstimmung auf den Sollwert erfolgen soll, bleibt in diesem
Zusammenhang offen, so daß davon ausgegangen werden muß,
daß hier in der zweiten Reinigungsstufe eine manuelle Verstellung der Additivzugabe vorgenommen wird, falls der
Schadstoffgehalt im Reingas den Sollwert übersteigt.

Die Schadstoffabgabe unterliegt jedoch insbesondere bei
der Müllverbrennung erheblichen Schwankungen, insbesondere
in den verschiedenen Komponenten, wobei diese Schwankungen
häufig nur relativ kurzzeitig sind, d.h. in der zeitlichen
Konzentrationsverteilung für die Schadstoffkomponenten
treten kurzzeitige, sehr hohe Peaks auf. Diese Peaks können
so hoch sein, daß sie durch die kontinuierlich zugegebenen
Additive nicht kompensiert werden, da die Additivzugabe
beispielsweise auf den Mittelwert der Schadstoffabgabe oder
geringfügig darüber eingestellt ist. Vielfach wird daher
bislang die kontinuierliche Additivzugabe relativ hoch über
dem erforderlichen Mittelwert eingestellt, wodurch sich
über relativ lange Zeiträume hinweg eine zu hohe Additivzugabe ergibt, d.h. der Verbrauch an trockenen Additiven, die
dann nicht genutzt werden, ist relativ hoch. Trotzdem kann
auch in diesem Fall nicht verhindert werden, daß sehr hohe,
relativ kurzzeitige Schadstoff-Peaks nicht ausreichend
kompensiert werden und die Emissionsgrenzwerte überstiegen
werden.

0103881

Demgegenüber liegt der Erfindung die Aufgabe zugrunde, bei der Rauchgasreinigung mittels staubförmiger Additive die erforderliche Additivzugabe zu verringern und den Reinigungsgrad zu erhöhen.

Bei der Lösung dieser Aufgabe geht die Erfindung von dem Grundgedanken aus, den Gehalt des aus dem Rauchgas zu entfernenden Schadstoffs im ungereinigten und/oder im teilgereinigten Rauchgas zu messen und über eine Regelschleife mit Sollwert/Istwert-Vergleich die Additivzufuhr einzustellen. Diese Lösung ist außerordentlich einfach, da im Vergleich zum Stand der Technik lediglich ein Schadstoffdetektor in Strömungsrichtung vor einer steuerbaren Additivzufuhr angeordnet werden muß, der über die Sollwert/Istwert-Regelschleife die Additivzufuhr ansteuert. Je schneller die Regelung der Additivzufuhr anspricht, um so besser kann auf rasche Änderungen des Schadstoffgehaltes reagiert werden, so daß die Zugabe an staubförmigem Additiv praktisch immer außerordentlich nahe an der für die ausreichende Rauchgasreinigung erforderlichen stöchiometrischen Menge liegt. Dadurch wird die Rauchgasreinigung erheblich verbessert und gleichzeitig die Menge an einzusetzendem Additiv verringert.

Da die erfindungsgemäß erforderlichen Maßnahmen relativ geringfügige Eingriffe in eine bestehende Reinigungsanlage erfordern, ist ein Nachrüsten vorhandener Anlagen relativ einfach und mit geringem Kostenaufwand möglich. Insbesonder besteht praktisch kein zusätzlicher Platzbedarf. Im Rahmen der Erfindung hat sich ferner gezeigt, daß bei nachgeschaltetem Elektrofilter außerordentlich gute Reinigungswerte auch für Schwermetalle, wie Cd, erzielt werden. Insbesonder ist der Einsatz von Elektrofiltern bei höheren Temperaturen (etwa oberhalb 180°C) in dieser Hinsicht günstiger als Tuchfilter, jedoch können die erfindungsgemäßen Maßnahmen hinsichtlich der Abscheidung von gasförmigen Schadstoffen in zufriedenstellender Weise auch mit anderen Filtern, wie Tuchfiltern, erzielt werden.

0103881

Die Messung des Gehalts an gasförmigen Schadstoffen kann
in Absolutwerten und ggf. zusätzlich differentiell erfolgen, so daß in der Regelschleife der Schadstoffanstieg
und ggf. der Wendepunkt im Kurvenverlauf ermittelt werden
können, um den zu erwartenden Kurvenverlauf frühzeitig abschätzen zu können und so die Steuerung der Additivzufuhr
zu verbessern.

Die erfindungsgemäßen Maßnahmen können sowohl bei einstufiger als auch bei mehrstufiger Additivzufuhr angewendet werden; im ersteren Fall wird die einzige Additivzufuhr geregelt, und im letzteren Fall wird zumindest eine
Additivzufuhrstufe geregelt, die dann vorzugsweise als
Zufuhr mit Feindosierung, d.h. als Feinzufuhr, ausgebildet
ist. Die Grobzufuhr kann dabei auf einen Wert dauerhaft
eingestellt werden, der praktisch immer unter dem Wert
liegt, der für eine ausreichende Schadstoffabscheidung
erforderlich wäre. In der Praxis liegt daher der Wert für
die Grobzufuhr geringfügig unterhalb des erforderlichen
Langzeit-Mittelwerts, während mit Hilfe der geregelten
Feinzufuhr der über den Mittelwert hinausgehende, stark
schwankende Schadstoff abgeschieden wird.

Die Grobzufuhr sollte vorzugsweise kontinuierlich oder
quasikontinuierlich bei einem praktisch konstanten Wert
erfolgen, wobei im Falle eines sich langfristig ändernden
Schadstoffmittelwertes auch die Grobzufuhr durch entsprechende Regelung an den neuen Langzeit-Mittelwert angepaßt
werden könnte.

Erfindungsgemäß wird die Feinzufuhr entsprechend dem ermittelten Regelwert kontinuierlich oder portionsweise
gesteuert, d.h. die Regelung der Feinzufuhr erfolgt beispielsweise durch kontinuierliches Ändern der Düsenöffnung
oder durch unterschiedlich große, portionsweise Abgabe des
oder unterschiedlich häufige
Additivs.

Für eine optimale, mehrstufige Schadstoffabscheidung erfolgt die gesteuerte Feinzufuhr erst nach der Grobzufuhr, da in diesem Falle in besonders vorteilhafter Weise der Schadstoffdetektor unmittelbar vor der Feinzufuhr und damit in       bereits stark gereinigten Rauchgas mit entsprechender Erhöhung der Detektorempfindlichkeit angeordnet werden kann.

Besonders günstige Reinigungswerte ergeben sich, wenn man den Schadstoff-Istwert für die Steuerung der Feinzufuhr nicht nur im ungereinigten und/oder teilgereinigten Rauchgas, sondern auch im Reingas mißt, so daß man eine zusätzlich rückgekoppelte Feinzufuhrsteuerung erhält.

Erfindungsgemäß kann ferner nach der Grobzufuhr oder gleichzeitig mit dieser das Rauchgas-Additiv-Gemisch parallel zum Gasstrom,      beispielsweise mit Hilfe eines statischen Gasmischers, homogenisiert werden, so daß der Wirkungsgrad bei der Grob- und der Feinreinigung sowie die Meßgenauigkeit für den Schadstoff-Istwert verbessert werden, was ebenfalls zu einer Verbesserung der Reinigungsqualität führt.

In vorteilhafter Weise kann als statischer Gasmischer beispielsweise ein sogenannter Sulzer-Gasmischer mit offenen, sich kreuzenden Kanälen (vgl. Chem.-Ing.-Tech. 53 (1981) Nr. 1, S. 39-42 und CH-PS 547 120) verwendet werden, der einen hohen Mischwirkungsgrad aufweist.

Da der Druckverlust im Rauchgassystem bei Einsatz statischer Gasmischer sehr gering ist, können die erfindungsgemäßen Maßnahmen auch durch nachträglichen Einbau in bereits vorhandene Müllverbrennungsanlagen unter Verwendung der dort bereits installierten Rauchgasgebläse verwirklicht werden.

Die Zudosierung des Additivs erfolgt vorzugsweise nicht turbulent, sondern parallel zum Rauchgasstrom und abhängig von dessen Geschwindigkeit.

Die Erfindung zeichnet sich ferner insbesondere durch die
Merkmale der Patentansprüche sowie die der Ausführungsbeispiele aus.

Die Erfindung wird nachstehend mit Bezug auf die Zeichnung
näher erläutert. Es zeigen:

Figur 1: eine schematische Darstellung einer erfindungsgemäßen, zweistufigen Abgasreinigungsanlage und

Figur 2: schematisch ein beispielhaftes Ausgangssignal
des Schadstoffdetektors im ungereinigten Rauchgas.

Das in der Feuerungsanlage 1 entstehende Rauchgas wird
über eine erste Reinigungsstufe 2, eine zweite Reinigungsstufe 3 und einen Filter 4, beispielsweise einen Elektrofilter, geführt, und das gereinigte Abgas 5 gelangt über
ein Gebläse 6 in den Kamin. Die erste Reinigungsstufe 2
dient als Grobreinigung, wobei das pulverförmige Additiv
aus einem Vorratsbehälter 7 über eine Düse 8 in die erste
Reinigungsstufe 2 gelangt. In entsprechender Weise wird
der zweiten Reinigungsstufe über eine Düse 10 aus einem
Vorratsbehälter 9 pulverförmiges Additiv zugeführt; diese
zweite Reinigungsstufe 3 dient zur Feinreinigung, und zu
diesem Zweck kann die Düse 10 mit Hilfe eines Regelgliedes
12 gesteuert werden. Dieses Regelglied weist einen Sollwert/Istwert-Vergleicher auf, der unter Berücksichtigung
eines einstellbaren Sollwertes und eines Schadstoffmeßwertes von einem Schadstoffdetektor 13 und/oder 14 zwischen
der Feuerungsanlage 1 und der ersten Reinigungsstufe 2 bzw.
letzterer und der zweiten Reinigungsstufe 3 das Regelsignal
für die regelbare Düse 10 liefert.

Zusätzlich kann auch die Düse 8 für die Grobreinigung
regelbar ausgebildet sein, wobei in diesem Fall ein Regelglied 11 die Düse 8 ansteuert. Dieses zweite Regelglied 11
weist ebenfalls einen Sollwert/Istwert-Vergleicher auf,
der als Istwert beispielsweise ebenfalls das Meßsignal des
Schadstoffdetektors 13 erhält.

0103881

Der für die Grobreinigung vorgesehene Regelkreis der ersten Reinigungsstufe 2 hat eine wesentlich größere Zeitkonstante als der Regelkreis der zweiten Reinigungsstufe 3, so daß die kurzzeitigen, sehr hohen Schadstoffspitzen praktisch ausschließlich in der zweiten Reinigungsstufe 3 eliminiert werden.

Im Rahmen der Erfindung genügt eine der beiden Reinigungsstufen 2 oder 3, soweit deren Regelkreis für die Eliminierung der Schadstoffspitzen ausreichend schnell ist. Bessere Ergebnisse werden allerdings bei der beschriebenen zweistufigen Anlage oder mit weiteren Reinigungsstufen erzielt.

Zur Verbesserung des Regelverlaufs können im Strömungsweg der Rauchgase weitere Schadstoffdetektoren 15 und/oder 16 vorgesehen sein, die zwischen der zweiten Reinigungsstufe 3 und dem Filter 4 bzw. hinter diesem etwa im Abgaskamin angeordnet sein können. Dadurch wird eine optimale Überwachung mit automatischem Eingriff in die Regelkreise für die Zudosierung von Additiven zur ersten und/oder zur zweiten Reinigungsstufe 2 bzw. 3 gewährleistet.

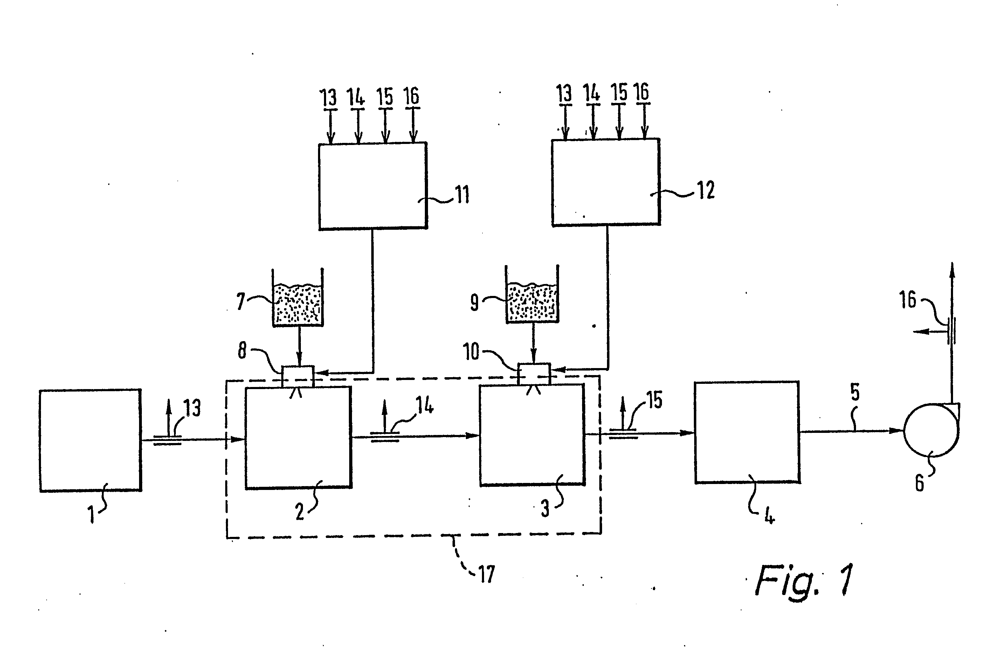

Vorzugsweise sind die verschiedenen Reinigungsstufen 2 und 3 mit den Düsen 8 und 10 in einem gemeinsamen in Fig. 1 gestrichelt eingezeichneten Reaktor 17 untergebracht.

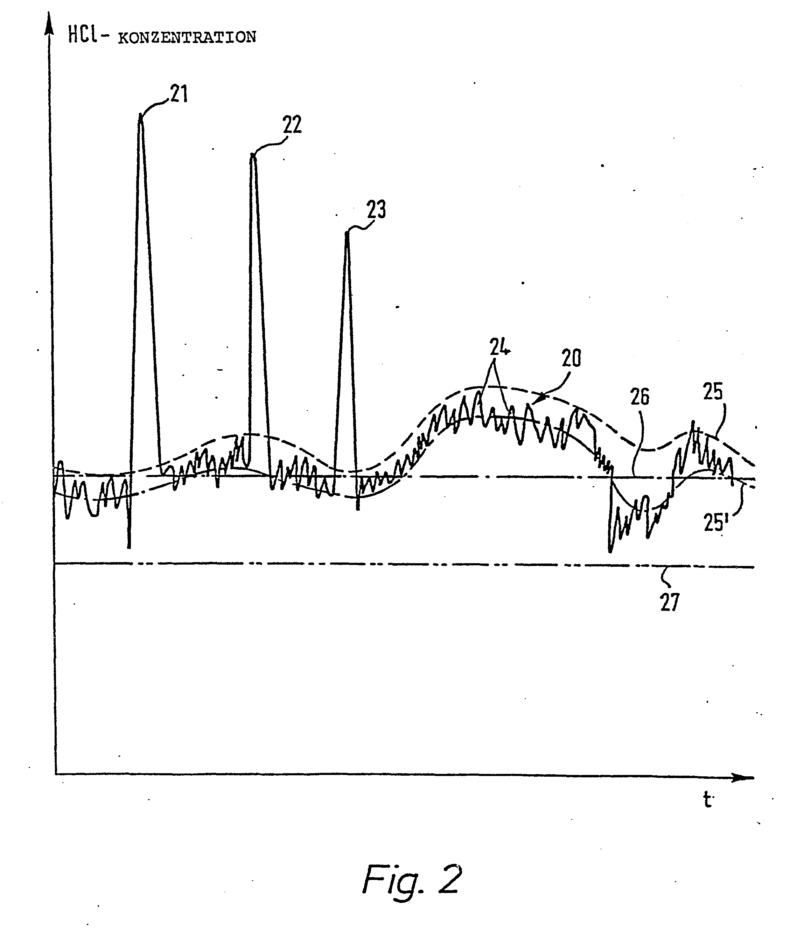

In Figur 2 ist der zeitliche Verlauf der HCl-Konzentration im ungereinigten Rauchgas dargestellt, wie er sich etwa als Ausgangssignal des Detektors 13 in Figur 1 ergibt. Die dargestellte Meßkurve 20 weist mehrere ausgeprägte Konzentrationsspitzen 21 bis 23 , die weit über den langfristigen Mittelwert 26 hinausragen, sowie kleinere Konzentrationsschwankungen 24 auf.

Bei einer zweistufigen Reinigungsanlage etwa gemäß Figur 1, bei der jedoch lediglich die zweite Reinigungsstufe 3 geregelt ist, müßte die Additivzufuhr zur ersten Reinigungsstufe2 auf einen Wert deutlich unter dem Mittelwert 26 eingestellt werden, so daß etwa der HCl-Anteil unterhalb der Linie 27 durch die erste Reinigungsstufe 2 eliminiert wird. Die zweite Reinigungsstufe 3 müßte dann den übrigen HCl-Anteil bis auf einen zulässigen Rest eliminieren.

Wird gemäß Figur 1 auch die erste Reinigungsstufe 2, d. h. die Zudosierung des staubförmigen Additivs über die regelbare Düse 8 gesteuert, so könnte etwa der HCl-Anteil unterhalb der Kurve 25 in der ersten Reinigungsstufe 2 eliminiert werden; in diesem Fall ist die durch die zweite Reinigungsstufe zu entfernende Schadstoffmenge wesentlich geringer als im Falle der ungeregelten ersten Reinigungsstufe, so daß die zweite Reinigungsstufe 3 wesentlich empfindlicher ist und praktisch nur auf schnelle und große Änderungen der Schadstoffkonzentration anzusprechen braucht und daher einen besseren Reinigungsgrad erreichen kann.

Bei Regelung der ersten Reinigungsstufe 2 gemäß Kurve 25 in Fig. 2 wird zwar das Additiv im Überschuß zugegeben, jedoch ist dieser im Vergleich zum Stand der Technik sehr gering . Im Rahmen der Erfindung kann dieser Überschuß weiter verringert oder sogar praktisch völlig ausgeschaltet werden, indem man die Regelkurve der 1. Reinigungsstufe unterhalb der in Fig. 2 eingezeichneten Kurve 25 verlegt (vgl. die Kurve 25') und auch die kleineren, kurzzeitigen Konzentrationsschwankungen 24 mit der 2. Reinigungsstufe eliminiert.

P a t e n t a n s p r ü c h e

1. Verfahren zum Abscheiden von gasförmigen Schadstoffen, wie Chlorwasserstoff, Fluorwasserstoff und Schwefeloxide aus Rauchgasen, insbesondere von Müllverbrennungsanlagen, durch Reaktion mit und/oder Bindung an staubförmige Additive, wie gelöschter Kalk ($Ca(OH)_2$), Branntkalk (CaO) oder Calciumkarbonat ($CaCO_3$), bei dem die Additive hinter dem Ofen in den Rauchgasstrom gegeben werden, und anschließendes Abscheiden der mit den Schadstoffen beladenen Additive, wobei man den Schadstoffgehalt im ungereinigten und/oder teilgereinigten Rauchgas mißt und durch Sollwert/Istwert-Vergleich die Additivzufuhr regelt, d a d u r c h   g e k e n n z e i c h n e t , daß die Additivzufuhr in Strömungsrichtung nach der Messung des Schadstoffgehalts erfolgt.

2. Verfahren nach Anspruch 1, dadurch gekennzeichnet, daß die Additivzufuhr an mindestens zwei Stellen für Grobzufuhr bzw. Feinzufuhr erfolgt.

3. Verfahren nach Anspruch 2, dadurch gekennzeichnet, daß die Grobzufuhr kontinuierlich oder quasikontinuierlich erfolgt

0103881

und die Feinzufuhr geregelt wird.

4. Verfahren nach Anspruch 3, dadurch gekennzeichnet, daß die Feinzufuhr entsprechend dem ermittelten Regelwert kontinuierlich oder portionsweise gesteuert wird.

5. Verfahren nach einem der Ansprüche 2 bis 4, dadurch gekennzeichnet, daß die Feinzufuhr in Strömungsrichtung nach der Grobzufuhr erfolgt.

6. Verfahren nach Anspruch 5, dadurch gekennzeichnet, daß die Messung des Schadstoff-Istwerts für die Steuerung der Feinzufuhr vor dieser erfolgt.

7. Verfahren nach Anspruch 6, dadurch gekennzeichnet, daß die Messung des Schadstoff-Istwerts für die Steuerung der Feinzufuhr vor der Grobzufuhr erfolgt.

8. Verfahren nach Anspruch 6 oder 7, dadurch gekennzeichnet, daß die Messung des Schadstoff-Istwerts für die Steuerung der Feinzufuhr zwischen dieser und der Grobzufuhr erfolgt.

9. Verfahren nach einem der Ansprüche 5 bis 8, dadurch gekennzeichnet, daß die Messung des Schadstoff-Istwerts für die Steuerung der Feinzufuhr im Rauchgas und/oder im Reingas erfolgt.

10. Verfahren nach einem der Ansprüche 3 bis 9, dadurch gekennzeichnet, daß die Grobzufuhr ebenfalls geregelt wird.

11. Verfahren nach Anspruch 10, dadurch gekennzeichnet, daß die Regelung der Grobzufuhr durch Messung des Schadstoffgehalts im Rauchgas und/oder Reingas und durch Sollwert/Istwert-Vergleich mit wesentlich größerer Zeitkonstante als die Regelung der Feinzufuhr erfolgt.

12. Verfahren nach einem der Ansprüche 2 bis 11, dadurch gekennzeichnet, daß bei und/oder nach der Grobzufuhr eine Homogenisierung des Rauchgas-Additiv-Gemisches erfolgt.

13. Verfahren nach einem der Ansprüche 2 bis 12, dadurch gekennzeichnet, daß bei und/oder nach der Feinzufuhr eine Homogenisierung des Rauchgas-Additiv-Gemisches erfolgt.

14. Verfahren nach Anspruch 12 oder 13, dadurch gekennzeichnet, daß zur Homogenisierung ein statischer Gasmischer verwendet wird.

15. Verfahren nach Anspruch 14, dadurch gekennzeichnet, daß der Gasmischer offene, sich kreuzende Kanäle aufweist.

16. Verfahren nach einem der Ansprüche 12 bis 15, dadurch gekennzeichnet, daß die Grob- und/oder Feinzufuhr des Additivs parallel zum Rauchgasstrom erfolgt.

17. Verfahren nach einem der Ansprüche 12 bis 16, dadurch gekennzeichnet, daß die Grob- und/oder Feinzufuhr des Additivs in Abhängigkeit von der Strömungsgeschwindigkeit des Rauchgases erfolgt.

18. Verfahren nach einem der Ansprüche 2 bis 17, dadurch gekennzeichnet, daß zum Abscheiden der mit den Schadstoffen beladenen Additive ein Elektrofilter vorgesehen ist.

19. Vorrichtung zum Reinigen der Abgase einer Feuerungsanlage (1) mit dem Verfahren nach einem der Ansprüche 1 bis 18 mit mindestens einer der Feuerungsanlage (1) nachgeschalteten Reinigungsstufe (2, 3) deren Additivzugabe zum Abscheiden der Schadstoffe in Abhängigkeit von einem Schadstoffmeßwert geregelt wird, dadurch gekennzeichnet, daß der Schadstoffmeßwertaufnehmer (13, 14) vor der zugehörigen Reinigungsstufe (2, 3) angeordnet ist.

Fig. 1

Fig. 2